(19) Europäisches Patentamt
European Patent Office
Office européen des brevets

(11) **EP 4 625 911 A1**

(12) **EUROPEAN PATENT APPLICATION**
published in accordance with Art. 153(4) EPC

(43) Date of publication:
**01.10.2025 Bulletin 2025/40**

(21) Application number: **22968810.6**

(22) Date of filing: **19.12.2022**

(51) International Patent Classification (IPC):
**H04L 27/00** *(2006.01)*

(52) Cooperative Patent Classification (CPC):
**H04L 27/00**

(86) International application number:
**PCT/CN2022/140128**

(87) International publication number:
**WO 2024/130506 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• WANG, Jian
  Shenzhen, Guangdong 518129 (CN)
• HU, Bin
  Shenzhen, Guangdong 518129 (CN)
• LI, Rong
  Shenzhen, Guangdong 518129 (CN)

(74) Representative: **Maiwald GmbH
Engineering
Elisenhof
Elisenstrasse 3
80335 München (DE)**

(54) **COMMUNICATION METHOD, APPARATUS AND STORAGE MEDIUM**

(57) Embodiments of this application provide a communication method and apparatus, and a storage medium. The method may include: A first node sends first signaling, where the first signaling indicates first description information of a first sub-model, and the first sub-model is at least one sub-model in a first model. The first node receives second signaling, where the second signaling indicates a first transmission resource. The first node sends or receives the first sub-model on the first transmission resource. Compared with communicating a full-model, in embodiments of this application in which nodes communicate only a sub-model based on a requirement, communication overheads can be reduced.

FIG. 3

Description

## TECHNICAL FIELD

This application relates to the field of communication technologies, and in particular, to a communication method and apparatus, and a storage medium.

## BACKGROUND

With advent of the big data era, each device generates a large amount of raw data in various forms every day. The data is generated in a form of an "island" and exists in every corner of the world. Conventional centralized learning requires that each edge device uniformly transmits local data to a server of a central end, and then uses the collected data to train and learn a machine learning model. However, this architecture is gradually limited by the following factors with development of the era:

1. If the central end needs to collect raw data from all edge devices, huge communication losses and computing power requirements are inevitably caused.
2. In conventional centralized learning, because a large amount of data is uploaded, a large latency is inevitably caused. Consequently, centralized learning cannot meet a real-time requirement of an actual task scenario.
3. In consideration of problems such as industry competition, user privacy security, and complex administrative procedures, centralized integration of data faces increasing resistance and constraints.

In an existing distributed learning method in a wireless communication system, information such as a model parameter or a gradient that needs to be exchanged between nodes in a distributed learning process is considered as general data, and is sent and received by using a conventional communication protocol stack. When performing distributed node scheduling, a base station needs to consider both a channel state and importance of local data of a node. For example, a distributed node with a good channel state and high importance of local data is preferentially scheduled. In this method, user scheduling and distributed learning performance of the communication system are associated. However, in this manner, nodes exchange a full-model parameter or gradient each time, and consequently communication overheads are also high.

## SUMMARY

This application discloses a communication method and apparatus, and a storage medium, to reduce communication overheads.

According to a first aspect, an embodiment of this application provides a communication method. The method may be performed by a communication device, or may be performed by a component (for example, a chip (system)) of a communication device. The method may include: A first node sends first signaling. The first signaling indicates first description information of a first sub-model. The first sub-model is at least one sub-model in a first model. The first node further receives second signaling. The second signaling indicates a first transmission resource. The first node sends or receives the first sub-model on the first transmission resource.

In this embodiment of this application, the first node sends the first signaling to a second node, and the first signaling indicates the first description information of the first sub-model. Based on an allocated transmission resource, the first node sends or receives the first sub-model on the transmission resource. Compared with communicating a full-model, in this solution in which the first node and the second node communicate only a sub-model based on a requirement, communication overheads can be reduced, and description information-based sub-model transmission can improve flexibility of a distributed learning system.

In a possible implementation, the first description information of the first sub-model includes at least one of the following information:

an identifier of the first sub-model and an identifier of the first model.

Further, the first description information of the first sub-model further includes an identifier of a third node, and the third node is a node that last updates the first sub-model in the first model. For example, the third node may be a base station that last updates the first sub-model in the first model. Alternatively, the third node may be a terminal that last updates the first sub-model in the first model.

For example, the first description information of the first sub-model includes the identifier of the first sub-model, the identifier of the first model, an identifier of the base station that last updates the first sub-model in the first model, and an identifier of the terminal that last updates the first sub-model in the first model.

In a possible implementation, the first node determines the first sub-model in the first model based on at least one of the following:

an artificial intelligence (Artificial Intelligence, AI) task requirement of the first node, computing power of the first node, local data information of the first node, and topology information of a network in which the first node is located.

For example, if the first node needs to complete a mouth recognition task in face recognition, the first node determines that the first model is a capsule network, and the first sub-model is a mouth recognition sub-model.

For another example, if the first node needs a boosting (boosting) network, and the computing power of the first node can implement network inference after a first-level network, a second-level network, and a third-level network are cascaded, sub-models required by the first node are a first-level sub-model, a second-level sub-model, and a third-level sub-model.

The local data is data used for model training or model inference. The local data information may include a feature of the local data and/or a modality of the local data. The feature of the local data may be, for example, pictures of different parts such as a mouth picture, an eye picture, and a nose picture. The modality of the local data may be, for example, different modalities such as image data, text data, and video data.

For example, if the first node completes an assisted driving task based on multi-modal data, and data collected by the first node is image data, a sub-model required by the first node is an image data processing sub-model.

The topology information may be understood as a relationship between the first node and a neighbor node. For example, the first node has a neighbor node.

For example, if the first node uses a permutation equivariant model to perform a resource allocation task, and the first node has data sent by a neighbor node, sub-models required by the first node are a local data processing sub-model and a neighbor node data processing sub-model of the permutation equivariant model.

The foregoing aspects may be used in combination, and this is not limited in this solution.

In a possible implementation, the first signaling further carries the local data information of the first node and/or model performance information of the first sub-model. The first node receives third signaling. The third signaling indicates a second transmission resource. The first node receives a parameter of a second sub-model on the second transmission resource. The second sub-model is an aggregated global sub-model.

The model performance information may be sub-model performance information. Alternatively, the model performance information includes full-model performance information and sub-model performance information. The model performance may be inference accuracy of a model.

The foregoing aggregation may be aggregating sub-models whose full-model identification (Full-Model Identification, FMID) fields and sub-model identification (Sub-Model Identification, SMID) fields are completely the same in sub-model description information (Sub-Model Description Information, SMDI). For example, the aggregation may be performing weighted averaging processing on parameters of the first sub-model whose FMID field and SMID field are completely the same in SMDI, to obtain a global sub-model.

In a possible implementation, the first description information of the first sub-model further includes the identifier of the third node. The third node is the node that last updates the first sub-model in the first model. The first node sends fourth signaling. The fourth signaling indicates second description information of the first sub-model. The second description information of the first sub-model further includes an identifier of a fourth node. The fourth node is a node that last updates the first sub-model in the first model. The fourth node is different from the third node. The first node receives fifth signaling. The fifth signaling indicates a third transmission resource. Then, the first node receives a parameter of the first sub-model on the third transmission resource.

For example, the third node is a first base station, and the fourth node is a second base station.

In a possible implementation, the first description information includes a full-model identification FMID field and a sub-model identification SMID field, and an FMID indicates a different artificial intelligence AI task.

In a possible implementation, an SMID is a single-level index or a multi-level index.

Optionally, when a model used for the AI task is a single-level model, the SMID is a single-level index. The single-level model may be understood as a model in which sub-models of a full-model have a same level, for example, a permutation equivariant model and a diffusion model.

Optionally, when a model used for the AI task is a multi-level model, the SMID is a multi-level index. The multi-level model may be understood as a model in which sub-models of a full-model have different levels, for example, a capsule network model, a multi-modal data fusion model, and a boosting model.

In a possible implementation, the first signaling is a random access request, and the first description information corresponds to a random access preamble sequence used by the random access request.

In a possible implementation, the second signaling includes the first description information of the first sub-model corresponding to the first transmission resource.

According to a second aspect, an embodiment of this application provides a communication method. The method may be performed by a communication device, or may be performed by a component (for example, a chip (system)) of a communication device. The method may include: A second node receives first signaling. The first signaling indicates first description information of a first sub-model. The first sub-model is at least one sub-model in a first model. The second node receives or sends the first sub-model on a first transmission resource.

In this embodiment of this application, the second node receives the first signaling sent by a first node, and the first signaling indicates the first description information of the first sub-model. Based on an allocated transmission resource, the second node receives or sends the first sub-model on the transmission resource. Compared with communicating a full-model, in this solution in which the first node and the second node communicate only a sub-model based on a requirement, communication overheads can be reduced.

In a possible implementation, the second node sends second signaling. The second signaling indicates the first transmission resource.

In a possible implementation, the first signaling further carries local data information of the first node and/or model performance information of the first sub-model. The second node determines, based on at least one of the local data information of the first node and/or the model performance information of the first sub-model, and channel state information, to send the second signaling to the first node.

The local data is data used for model training or model inference. The local data information may include a feature of the local data and/or a modality of the local data. The feature of the local data may be, for example, pictures of different parts such as a mouth picture, an eye picture, and a nose picture. The modality of the local data may be, for example, different modalities such as image data, text data, and video data.

The model performance information may be sub-model performance information. Alternatively, the model performance information includes full-model performance information and sub-model performance information. The model performance may be inference accuracy of a model.

Optionally, the second node may determine, based on the channel state information, a terminal that needs to send the second signaling. For example, a plurality of terminals send reference signals to a base station, so that the base station determines each piece of channel state information. The base station may select a terminal with a good channel condition to preferentially send or receive a model.

Alternatively, the second node determines, based on the local data information of the first node, a node that needs to send the second signaling. For example, the base station schedules and reports, based on a local data modality of each terminal, a sub-model for processing corresponding modal data in a multi-modal network, for example, a video data processing sub-model in a multi-modal data processing model. Alternatively, the base station schedules and reports, based on a local data feature of each terminal, a sub-model for processing corresponding data in a full machine learning model, for example, an eye identification sub-model in a capsule network.

For another example, the second node determines, based on the model performance information of the first sub-model, a node that needs to send the second signaling. For example, the base station schedules, based on model performance, a terminal with good model performance to report a sub-model with good performance to participate in model training.

The foregoing manners may be used in combination, and this is not limited in this solution.

In a possible implementation, the second node determines, based on the first description information of the first sub-model and at least one of the following, to send the second signaling to the first node, so that the second node sends the first sub-model to the first node:

an artificial intelligence AI task requirement of the first node, computing power of the first node, the local data information of the first node, and topology information of a network in which the first node is located.

In another possible implementation, the second node determines, based on the first description information of the first sub-model and at least one of the following, to send the second signaling to the first node, so that the second node receives the first sub-model from the first node:

an artificial intelligence AI task requirement of the second node, computing power of the second node, local data information of the second node, and topology information of a network in which the second node is located.

Optionally, the second node receives the second signaling. The second signaling indicates the first transmission resource.

In a possible implementation, the second signaling includes the first description information of the first sub-model corresponding to the first transmission resource.

In a possible implementation, the first description information of the first sub-model includes at least one of the following information:

an identifier of the first sub-model and an identifier of the first model.

Further, the first description information of the first sub-model further includes an identifier of a third node, and the third node is a node that last updates the first sub-model in the first model. For example, the third node may be a base station that last updates the first sub-model in the first model. Alternatively, the third node may be a terminal that last updates the first sub-model in the first model.

For example, the first description information of the first sub-model includes the identifier of the first sub-model, the identifier of the first model, an identifier of the base station that last updates the first sub-model in the first model, and an identifier of the terminal that last updates the first sub-model in the first model.

In a possible implementation, the second node sends third signaling. The third signaling indicates a second transmission resource. The second node sends a parameter of a second sub-model on the second transmission resource. The second sub-model is an aggregated global sub-model.

The foregoing aggregation may be aggregating sub-models whose FMID fields and SMID fields are completely the same in SMDI. For example, the aggregation may be performing weighted averaging processing on parameters of the first sub-model whose FMID field and SMID field are completely the same in SMDI, to obtain a global sub-model.

In a possible implementation, the first description information includes a full-model identification FMID field and a sub-model identification SMID field, and an FMID indicates a different artificial intelligence AI tasks.

In a possible implementation, an SMID is a single-level index or a multi-level index.

Optionally, when a model used for the AI task is a single-level model, the SMID is a single-level index. The single-level model may be understood as a model in which sub-models of a full-model have a same level, for example, a permutation equivariant model and a diffusion model.

Optionally, when a model used for the AI task is a multi-level model, the SMID is a multi-level index. The multi-level model may be understood as a model in which sub-models of a full-model have different levels, for example, a capsule network model, a multi-modal data fusion model, and a boosting model.

According to a third aspect, an embodiment of this application provides a communication apparatus. The apparatus includes a communication module, configured to: send first signaling. The first signaling indicates first description information of a first sub-model. The first sub-model is at least one sub-model in a first model. The communication module is further configured to: receive second signaling. The second signaling indicates a first transmission resource. The communication module is further configured to: send or receive the first sub-model on the first transmission resource.

In a possible implementation, the first description information of the first sub-model includes at least one of the following information: an identifier of the first sub-model and an identifier of the first model.

Optionally, the first description information of the first sub-model further includes an identifier of a third node. The third node is a node that last updates the first sub-model in the first model.

In a possible implementation, the apparatus further includes a processing module, configured to: determine the first sub-model in the first model based on at least one of the following:
an artificial intelligence AI task requirement of the apparatus, computing power of the apparatus, local data information of the apparatus, and topology information of a network in which the apparatus is located.

In a possible implementation, the first signaling further carries the local data information of the apparatus and/or model performance information of the first sub-model. The communication module is further configured to: receive third signaling. The third signaling indicates a second transmission resource. The communication module is further configured to: receive a parameter of a second sub-model on the second transmission resource. The second sub-model is an aggregated global sub-model.

In a possible implementation, the first description information of the first sub-model further includes the identifier of the third node. The third node is the node that last updates the first sub-model in the first model. The communication module is further configured to: send fourth signaling. The fourth signaling indicates second description information of the first sub-model. The second description information of the first sub-model further includes an identifier of a fourth node. The fourth node is a node that last updates the first sub-model in the first model, and the fourth node is different from the third node. The communication module is further configured to: receive fifth signaling. The fifth signaling indicates a third transmission resource. The communication module is further configured to: receive a parameter of the first sub-model on the third transmission resource.

In a possible implementation, the first description information includes a full-model identification FMID field and a sub-model identification SMID field, and an FMID indicates a different artificial intelligence AI task.

In a possible implementation, an SMID is a single-level index or a multi-level index.

Optionally, when a model used for the AI task is a single-level model, the SMID is a single-level index.

Optionally, when a model used for the AI task is a multi-level model, the SMID is a multi-level index.

In a possible implementation, the first signaling is a random access request, and the first description information corresponds to a random access preamble sequence used by the random access request.

In a possible implementation, the second signaling includes the first description information of the first sub-model corresponding to the first transmission resource.

According to a fourth aspect, an embodiment of this application provides a communication apparatus. The apparatus includes a communication module, configured to: receive first signaling. The first signaling indicates first description information of a first sub-model. The first sub-model is at least one sub-model in a first model. The communication module is further configured to: receive or send the first sub-model on a first transmission resource.

In a possible implementation, the communication module is further configured to: send second signaling. The second signaling indicates the first transmission resource.

In a possible implementation, the first signaling further carries local data information of a first node and/or model performance information of the first sub-model. The apparatus further includes a processing module, configured to: determine, based on at least one of the local data information of the first node and/or the model performance information of the first sub-model, and channel state information, to send the second signaling to the first node.

In a possible implementation, the apparatus further includes a processing module, configured to: determine, based on the first description information of the first sub-model and at least one of the following, to send the second signaling to the first node:

an artificial intelligence AI task requirement of the first node, computing power of the first node, local data information of the first node, and topology information of a network in which the first node is located.

Alternatively, the apparatus further includes a processing module, configured to determine, based on the first description information of the first sub-model and at least one of the following, to send the second signaling to the first node:

an artificial intelligence AI task requirement of the apparatus, computing power of the apparatus, local data information of the apparatus, and topology information of a network in which the apparatus is located.

In a possible implementation, the communication module is further configured to: receive second signaling. The second signaling indicates the first transmission resource.

In a possible implementation, the second signaling includes the first description information of the first sub-model corresponding to the first transmission resource.

In a possible implementation, the first description information of the first sub-model includes at least one of the following information:

an identifier of the first sub-model and an identifier of the first model.

In a possible implementation, the first description information of the first sub-model further includes an identifier of a third node, and the third node is a node that last updates the first sub-model in the first model.

In a possible implementation, the communication module is further configured to: send third signaling. The third signaling indicates a second transmission resource. The communication module is further configured to: send a parameter of a second sub-model on the second transmission resource. The second sub-model is an aggregated global sub-model.

In a possible implementation, the first description information includes a full-model identification FMID field and a sub-model identification SMID field, and an FMID indicates a different artificial intelligence AI task.

In a possible implementation, an SMID is a single-level index or a multi-level index.

Optionally, when a model used for the AI task is a single-level model, the SMID is a single-level index.

Optionally, when a model used for the AI task is a multi-level model, the SMID is a multi-level index.

For the third aspect or the fourth aspect, in a possible implementation, the processing module may be a processor, and the communication module may be a transceiver module, a transceiver, or a communication interface. It may be understood that the communication module may be a transceiver in the apparatus, for example, implemented by using an antenna, a feeder, a codec, or the like in the apparatus. Alternatively, if the communication apparatus is a chip disposed in a device, the communication module may be an input/output interface of the chip, for example, an input/output circuit or a pin.

According to a fifth aspect, an embodiment of this application provides a communication apparatus. The communication apparatus includes one or more processors, and the one or more processors are configured to execute a computer program stored in one or more memories, so that the communication apparatus implements the method according to any implementation in the first aspect or the method according to any implementation in the second aspect.

In a possible implementation, the communication apparatus further includes the one or more memories.

In a possible implementation, the communication apparatus is a chip or a chip system.

According to a sixth aspect, an embodiment of this application provides a computer-readable storage medium. The computer-readable storage medium stores instructions, and when the instructions are executed by a processor, the method according to any implementation in the first aspect is implemented, or the method according to any implementation in the second aspect is implemented.

According to a seventh aspect, an embodiment of this application provides a computer program product, including a computer program. When the computer program is executed, the method according to any implementation in the first aspect is implemented, or the method according to any implementation in the second aspect is implemented.

According to an eighth aspect, an embodiment of this application provides a communication system, including the apparatus according to any implementation in the third aspect and the apparatus according to any implementation in the fourth aspect.

It may be understood that the apparatus according to the third aspect, the apparatus according to the fourth aspect, the apparatus according to the fifth aspect, the computer storage medium according to the sixth aspect, the computer program product according to the seventh aspect, or the communication system according to the eighth aspect is configured to perform the method according to any implementation in the first aspect and the method according to any implementation in the second aspect. Therefore, for beneficial effect that can be achieved, refer to the beneficial effect in the corresponding method. Details are not described herein again.

**BRIEF DESCRIPTION OF DRAWINGS**

The following describes the accompanying drawings used in embodiments of this application.

FIG. 1 is a diagram of an application scenario of a communication system according to an embodiment of this application;
FIG. 2a is a diagram of an application scenario of another communication system according to an embodiment of this application;
FIG. 2b is a diagram of an application scenario of still another communication system according to an embodiment of this application;
FIG. 3 is a schematic flowchart of a communication method according to an embodiment of this application;
FIG. 4a is a diagram of a permutation equivariant model according to an embodiment of this application;
FIG. 4b is a diagram of a face recognition model according to an embodiment of this application;
FIG. 4c is a diagram of a model for processing multi-modal data according to an embodiment of this application;
FIG. 4d is a diagram of a boosting model according to an embodiment of this application;
FIG. 4e is a diagram of a diffusion model according to an embodiment of this application;
FIG. 5 is a schematic flowchart of another communication method according to an embodiment of this application;
FIG. 6 is a schematic flowchart of still another communication method according to an embodiment of this application;
FIG. 7 is a schematic flowchart of still yet another communication method according to an embodiment of this application;
FIG. 8 is a diagram of a structure of a communication apparatus according to an embodiment of this application;
FIG. 9 is a diagram of a structure of another communication apparatus according to an embodiment of this application; and
FIG. 10 is a diagram of a hardware structure of a communication apparatus according to an embodiment of this application.

**DESCRIPTION OF EMBODIMENTS**

The following describes embodiments of this application with reference to the accompanying drawings in embodiments of this application. Terms used in implementations of embodiments of this application are merely used to explain specific embodiments of this application, but are not intended to limit this application.

It should be noted that in this application, "sending" may be understood as "outputting", and "receiving" may be understood as "inputting". In "sending information to A", "to A" indicates only a direction of information transmission, A is a destination, and "sending information to A" is not restricted to direct sending over an air interface. "Sending information to A" includes directly sending information to A and indirectly sending information to A through a transmitter. Therefore, "sending information to A" may also be understood as "outputting information to A". Similarly, "receiving information from A" indicates that a source of the information is A, including directly receiving the information from A and indirectly receiving the information from A through a receiver. Therefore, "receiving information from A" may also be understood as "inputting information from A".

It may be understood that, in this application, an "indication" may include a direct indication, an indirect indication, an explicit indication, and an implicit indication. When a piece of indication information is described as indicating A, it may be understood that the indication information carries A, directly indicates A, or indirectly indicates A. In this application, information indicated by the indication information is referred to as to-be-indicated information. In a specific implementation process, there are a plurality of manners of indicating the to-be-indicated information. For example, the manners include, but are not limited to, a manner in which the to-be-indicated information, for example, the to-be-indicated information itself or an index of the to-be-indicated information, may be directly indicated, or a manner in which the to-be-indicated information may be indirectly indicated by indicating other information. There is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information pre-agreed on (for example, stipulated in a protocol), to reduce indication overheads to some extent. The to-be-indicated information may be sent as a whole, or may be divided into a plurality of pieces of sub-information for separate sending. In addition, sending periodicities and/or sending occasions of these pieces of sub-information may be the same or different. A specific sending method is not limited in this application. The sending periodicities and/or the sending occasions of these pieces of sub-information may be predefined, for example, predefined according to a protocol, or may be configured by a transmitting end device by sending configuration information to a receiving end device.

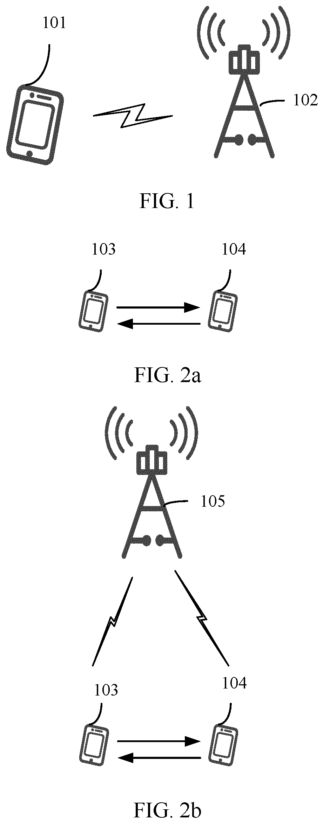

The following describes in detail a system architecture in embodiments of this application with reference to the accompanying drawings. FIG. 1 is a diagram of an application scenario of a communication system according to an embodiment of this application. The communication system may include a terminal 101 and a network device 102.

The terminal 101 may alternatively be referred to as a terminal device, a user equipment (user equipment, UE), a mobile station, a mobile terminal, or the like. The terminal may be widely used in various scenarios, for example, device-to-device (device-to-device, D2D) communication, vehicle to everything (vehicle to everything, V2X) communication, machine-type communication (machine-type communication, MTC), internet of things (internet of things, IOT), virtual reality, augmented reality, industrial control, self-driving, telemedicine, a smart grid, smart furniture, a smart office, a smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in embodiments of this application.

The network device 102 may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like, or may be a module or a unit that completes a part of functions of the base station, for example, may be a central unit (central unit, CU), or may be a distributed unit (distributed unit, DU). The network device 102 may be a macro base station, may be a micro base station or an indoor base station, may be a relay node or a donor node, or the like. A specific technology and a specific device form that are used by the network device 102 are not limited in embodiments of this application. For ease of description, the following provides descriptions by using an example in which the base station serves as the network device.

The base station and the terminal may be fixed or movable. The base station and the terminal may be deployed on the land, including an indoor device, an outdoor device, a handheld device, or a vehicle-mounted device; may be deployed on the water; or may be deployed on an airplane, a balloon, and an artificial satellite in the air. Application scenarios of the base station and the terminal are not limited in embodiments of this application.

FIG. 2a is a diagram of an application scenario of another communication system according to an embodiment of this application. The communication system may include a terminal 103 and a terminal 104. For descriptions of the terminal, refer to the foregoing descriptions. Details are not described herein again.

In a possible implementation, as shown in FIG. 2b, the system further includes a network device 105.

It should be noted that a quantity of network devices and a quantity of terminals are not limited in embodiments of this application. Communication between a base station and a terminal, between base stations, or between terminals may be performed by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be simultaneously performed by using a spectrum below 6 GHz and a spectrum above 6 GHz. A spectrum resource for wireless communication is not limited in embodiments of this application.

In embodiments of this application, a function of the base station may be performed by a module (for example, a chip) in the base station, or may be performed by a control subsystem including the function of the base station. The control subsystem that has the base station function herein may be a control center in the foregoing application scenarios, such as a smart grid, industrial control, smart transportation, and a smart city. A terminal function may be performed by a module (for example, a chip or a modem) in a terminal, or may be performed by an apparatus that has the terminal function.

The foregoing describes the architecture for embodiments of this application. The following describes the method in embodiments of this application in detail.

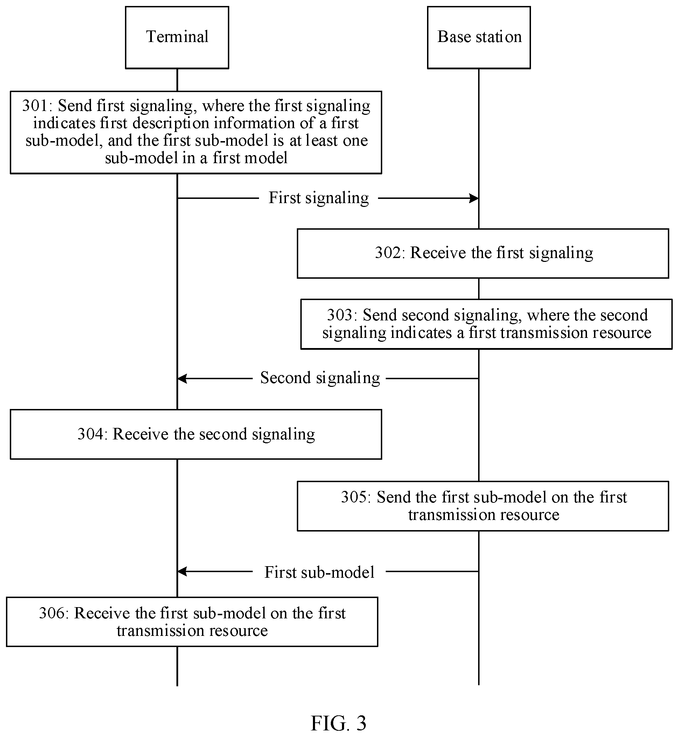

FIG. 3 is a schematic flowchart of a communication method according to an embodiment of this application. Optionally, the method may be applied to the foregoing communication system, for example, the communication system shown in FIG. 1. As shown in FIG. 3, the communication method may include steps 301 to 306. It should be understood that, for ease of description in this application, a sequence of 301 to 306 is used for description, but this is not intended to limit execution that is necessary in the foregoing sequence. An execution sequence, execution time, a quantity of execution times, and the like of the foregoing one or more steps are not limited in embodiments of this application. The following uses an example in which steps 301, 304, and 306 of the communication method are performed by a terminal, and steps 302, 303, and 305 are performed by a base station for description. This application is also applicable to other execution bodies. Steps 301 to 306 are specifically as follows.

301: The terminal sends first signaling, where the first signaling indicates first description information of a first sub-model, and the first sub-model is at least one sub-model in a first model.

The first model may be a full-model. For example, the full-model may be a single-level model or a multi-level model.

The single-level model may be understood as a model in which sub-models of a full-model have a same level, for example, a permutation equivariant model and a diffusion model. The multi-level model may be understood as a model in which sub-models of a full-model have different levels, for example, a capsule network model, a multi-modal data fusion model, and a boosting model.

The first sub-model is at least one sub-model in the first model. In other words, the first sub-model is at least one sub-model obtained through model splitting of the first model. The model splitting may be splitting a full-model into one or more sub-models with the same or different functions. Certainly, another splitting manner may also be used. This is not strictly limited in this solution.

The following describes model splitting manners.

(1) Division of a permutation equivariant model

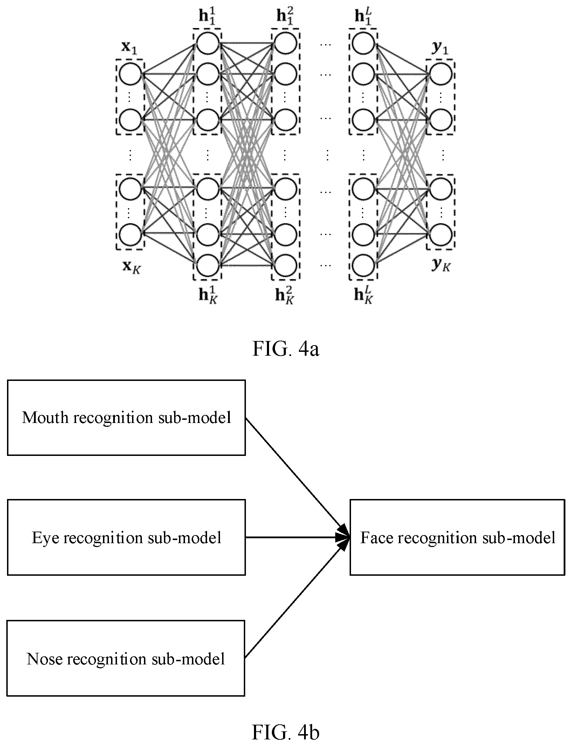

Given $X = [x_1, x_2, ..., x_k]$, if an equation $Y = f(X) = [y_1, y_2, ..., y_k]$, for any permutation $\pi(k) = p_k$ and $\tilde{x} = [x_{p1}, x_{p2}, ..., x_{pK}]$, $\tilde{Y} = f(\tilde{x}) = [y_{p1}, y_{p2}, ..., y_{pK}]$ is satisfied, the equation $f$ is permutation equivariant with $X$. $X$ is an input vector of the equation, $x_1, x_2, ..., x_k$ are elements of the input vector, and k is an index of the element of the input vector. Y is an output vector of the equation, $f(X)$ is the equation, and $y_1, y_2, ..., y_k$ are elements of the output vector. $\pi(k)$ is a permutation operation, and $p_k$ is an index obtained through the permutation of the index k. $\tilde{X}$ is an input vector after the permutation, $x_{p1}, x_{p2}, ..., x_{pK}$ are elements of the input vector after the permutation, $\tilde{Y}$ is an output vector of an equation in which $\tilde{X}$ is an input vector, and $y_{p1}, y_{p2}, ..., y_{pK}$ are elements in $\tilde{Y}$. When a neural network is used to implement the equation $f$, a structure of the neural network is shown in FIG. 4a. An input is data $[x_1, x_2, ..., x_K]$ of K users, and an output is an inference result $[y_1, y_2, ..., y_K]$ of the K users. $h_k^l$ is an output feature vector of the $l^{th}$ hidden layer of the $K^{th}$ user. Calculation of each layer of the neural network model may be expressed as $h^l = \sigma(W^{l-1,l}h^{l-1})$, to be specific, an output feature vector of the $l^{th}$ layer is obtained by multiplying an output feature vector of the $(l-1)^{th}$ layer by a parameter matrix $W^{l-1,l}$ of the layer and then by using an activation function $\sigma$. The parameter matrix $W^{l-1,l}$ may be expressed as:

$$W^{l-1,l} = \begin{bmatrix} S^{l-1,l} & O^{l-1,l} & ... & O^{l-1,l} \\ O^{l-1,l} & S^{l-1,l} & ... & O^{l-1,l} \\ \vdots & \vdots & \ddots & \vdots \\ O^{l-1,l} & O^{l-1,l} & ... & S^{l-1,l} \end{bmatrix}$$

Herein, $S^{l-1,l}$ is a parameter matrix of a sub-model used to process current user data, and $O^{l-1,l}$ is a parameter matrix of a sub-model used to process other user data. To be specific, the parameter matrix $W^{l-1,l}$ is formed by a matrix $S^{l-1,l}$ on a diagonal and a matrix $O^{l-1,l}$ on a non-diagonal. The matrix $S^{l-1,l}$ and the matrix $O^{l-1,l}$ are corresponding to two neural network sub-models. The two sub-models are respectively used to process local data and neighbor node data. To be specific, a full permutation equivariant model can be split into two sub-models of the same level.

(2) Model splitting based on an input data feature

FIG. 4b is a diagram of a structure of a face recognition model. When the model completes a face recognition task, the model may be split into a mouth recognition sub-model, an eye recognition sub-model, and a nose recognition sub-model. The mouth recognition sub-model is used to recognize a mouth-related part of input data, the eye recognition sub-model is used to recognize an eye-related part of the input data, and the nose recognition sub-model is used to recognize a nose-related part of the input data. Then, the recognition result is input into a next-level sub-model, that is, a face recognition sub-model. In other words, the face recognition model may be split into the mouth recognition sub-model, the eye recognition sub-model, and the nose recognition sub-model at a first level, and the face recognition sub-model at a second level. That is, the face recognition model may be a multi-level model.

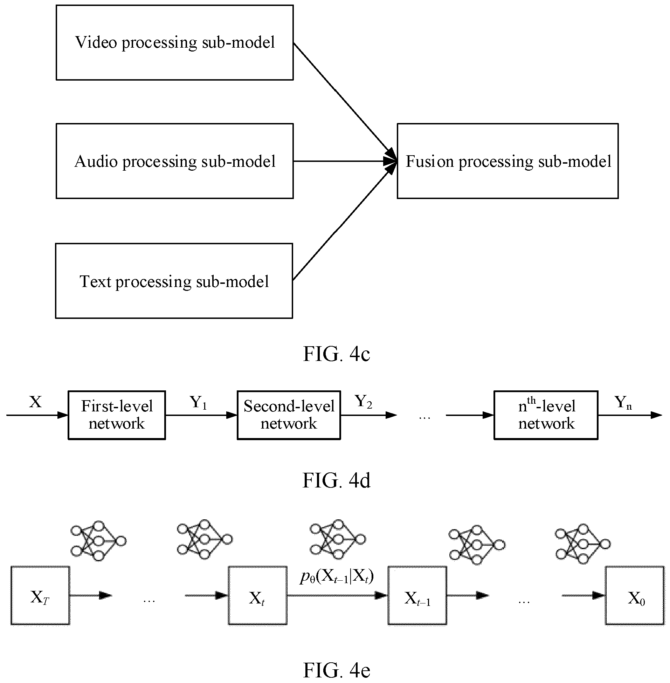

For another example, FIG. 4c is a diagram of a structure of a model for processing multi-modal data. For example, input data includes data of a plurality of modalities such as a video, audio, and text. Therefore, a plurality of sub-models (a video processing sub-model, an audio processing sub-model, and a text processing sub-model) may be used to separately process data of different modalities, and then a processing result is input into a next-level fusion processing sub-model for fusion processing. Correspondingly, the model for processing the multi-modal data is also a multi-level model.

(3) Splitting of a serial machine learning model

The serial machine learning model has a serial structure, and has a plurality of cascaded sub-models. An output of each level can be used independently.

FIG. 4d is a diagram of a structure of a serial machine learning model (for example, a boosting model). After an input X of the model is processed by multi-level sub-models, result precision (inference performance) becomes better. If a user only needs an inference result with reduced precision, an output (for example, $Y_1$ or $Y_2$) of previous-level sub-models may be selected to use. If the user needs an inference result with high precision, an output (for example, $Y_n$) of a subsequent sub-model may be selected to use. Optionally, previous sub-models make a great contribution to precision improvement, and processing of a next-level sub-model needs to be performed based on a processing result of a previous-level sub-model. For example, the first-level network shown in FIG. 4d is more important than subsequent sub-models. In other words, the boosting network may be split into a plurality of sub-models, and each sub-model corresponds to a level of processing in the original boosting network. That is, the boosting network is also a multi-level model.

For another example, FIG. 4e is a diagram of another serial machine learning model (for example, a diffusion model). An input of the diffusion model is Gaussian white noise data, and generated data (for example, picture data) is obtained through multi-level noise reduction processing. When quality of data that needs to be generated is high, noise reduction processing may be performed for a large quantity of times. On the contrary, when the quality of the data that needs to be generated is low, noise reduction processing may be performed only for a small quantity of times.

Optionally, sub-models used for noise reduction processing at all levels in the diffusion model may be the same. Therefore, the diffusion model may be split into a sub-model. A full diffusion model of different lengths (depths) is obtained by understanding different times of the sub-model. When a same sub-model is used for noise reduction processing at all levels in the diffusion model, the diffusion model is also a single-level model.

The foregoing describes only splitting of several models as an example. There may alternatively be other models, or may be other splitting manners. This is not strictly limited in this solution.

Based on the sub-model obtained through splitting, the following describes description information of the sub-model.

In a possible implementation, the first description information of the first sub-model (Sub-Model Description Information, SMDI) includes an identifier of the first sub-model. For example, the foregoing sub-models have different identifiers. Therefore, the identifiers of the sub-models may be used to distinguish between the sub-models. For example, the identifiers of the sub-models are different Arabic numerals, or different letters or symbols.

In another possible implementation, the first description information of the first sub-model includes an identifier of the first model. In other words, the sub-models are distinguished based on identifiers of different full-models. For example, the first model is a diffusion model, and there is only one sub-model in the first model. Therefore, an identifier of a full-model may be used for distinguishing.

In still another possible implementation, the first description information of the first sub-model includes the identifier of the first model and the identifier of the first sub-model. In other words, different full-models are corresponding to different identifiers, and identifiers of different sub-models corresponding to a same full-model are also different. For example, the identifier of the first model and the identifier of the first sub-model may be shown in Table 1:

Table 1

| AI task | Full-model | FMID | Sub-model | SMID |
|---|---|---|---|---|
| Task 1 (multi-node collaborative positioning) | Permutation equivariant neural network | A | Local data processing sub-model | a |
| | | | Neighbor node data processing sub-model | b |
| Task 2 (face recognition) | Capsule network | B | Mouth recognition sub-model | 1-a |
| | | | Eye recognition sub-model | 1-b |
| | | | Nose recognition sub-model | 1-c |
| | | | Face recognition sub-model | 2-a |
| Task 3 (multi-modal data assisted driving) | Multi-modal network | C | Image data processing sub-model | 1-a |
| | | | Millimeter-wave radar data processing sub-model | 1-b |
| | | | Lidar data processing sub-model | 1-c |
| | | | Fusion processing sub-model | 2-a |
| Task 4 (multi-precision channel estimation) | Boosting network | D | First-level sub-model | 1-a |
| | | | ... $n^{th}$-level sub-model | n-a |
| Task 5 (data generation) | Diffusion model | E | Noise reduction sub-model | a |

The full-model identification (Full-Model Identification, FMID) shown in Table 1 is used to describe an index of a full-model corresponding to a sub-model, and corresponds to a function (task) of the full-model. For example, A, B, C, D, and E in the table are used for FMID indexes, and are used to indicate different artificial intelligence (Artificial Intelligence, AI) tasks. The sub-model identification (Sub-Model Identification, SMID) is used to describe an index of a sub-model in a full-model. The SMID may use a single-level index and a multi-level index. For example, for the permutation equivariant model, its sub-model for processing local data is of the same importance as its sub-model for processing neighbor node data, and single-level indexes of a and b may be used, respectively. For another example, in the face recognition task based on the capsule network, the mouth recognition sub-model, the eye recognition sub-model, and the nose recognition sub-model are all at the first level, and are indexed by using 1-a, 1-b, and 1-c respectively. The face recognition sub-model is processed at the second level based on output results of the sub-models. Therefore, 2-a may be used for indexing. For another example, in the boosting network, the first-level sub-model is more important than a subsequent sub-model, and is indexed by using 1-a, and an $n^{th}$-level sub-model is indexed by using n-a.

Based on the foregoing possible implementations, the first description information of the first sub-model further includes an identifier of a third node. The third node is a node that last updates the first sub-model in the first model. The third node may be a base station, a terminal, or the like. The description information can be used to describe transmission of sub-models between nodes in a distributed learning system.

For example, the first description information of the first sub-model includes the FMID and the SMID, and further includes a base station identification (Base Station Identification, BSID) and a terminal identification (User Equipment Identification, UEID). The first description information may be expressed as BSID-UEID-FMID-SMID. The BSID is used to describe an index of a BS whose sub-model is last updated on a BS side. The UEID is used to describe an index of a UE whose sub-model is last updated on a UE side. Optionally, when the sub-model is last updated on the BS side, the BS performs an aggregation operation on the sub-models, and the UEID is set to a default value 0. Correspondingly, when the sub-model is last updated on the UE side, the UE performs an aggregation operation on the sub-models, and the BSID is set to a default value 0.

Based on the description information SMDI of the foregoing sub-model, it may be convenient to request, schedule, transmit, and the like of the sub-model as required in a process such as random access and node scheduling.

In a possible implementation, the UE explicitly adds an SMDI field to Msg3 signaling such as radio resource control (Radio Resource Control, RRC) Connection Request signaling, RRC Re-establishment Request signaling, and RRC handover Confirm signaling, to send the signaling.

For example, the first signaling is used for a random access request. Optionally, the first description information corresponds to a random access preamble sequence used by the random access request. For example, the system may construct a correspondence between a random access pilot sequence and sub-model SMDI. In this way, the UE sends the pilot sequence, to implicitly carry SMDI of a sub-model required by the UE. Optionally, a plurality of pilot sequences may be corresponding to same SMDI, to avoid a collision that occurs when a plurality of UEs that need a same sub-model simultaneously initiate access requests. Certainly, the first description information may alternatively be the description information shown in Table 1. This is not limited in this solution.

The first description information SMDI is described above. The following describes a manner in which the UE determines the first sub-model in the first model.

(1) Determine the first sub-model in the first model based on an artificial intelligence AI task requirement of the UE. For example, if the UE needs to complete a mouth recognition task in face recognition, the UE determines that the first model is a capsule network, and the first sub-model is a mouth recognition sub-model.

(2) Determine the first sub-model in the first model based on computing power of the UE. For example, if the UE needs a boosting network, and the computing power of the UE can implement network inference after the first-level, second-level, and third-level networks are cascaded, the sub-models required by the UE are the first-level sub-model, the second-level sub-model, and the third-level sub-model.

(3) Determine the first sub-model in the first model based on local data information of the UE.

The local data is data used for model training or model inference. The local data information may include a feature of the local data and/or a modality of the local data. The feature of the local data may be, for example, pictures of different parts such as a mouth picture, an eye picture, and a nose picture. The modality of the local data may be, for example, different modalities such as image data, text data, and video data.

For example, if the UE completes an assisted driving task based on multi-modal data, and data collected by the UE is image data, a sub-model required by the UE is an image data processing sub-model.

(4) Determine the first sub-model in the first model based on topology information of a network in which the UE is located.

The topology information may be understood as a relationship between the UE and a neighbor node. For example, the UE has a neighbor node.

For example, if the UE uses a permutation equivariant model to perform a resource allocation task, and the UE has data sent by a neighbor node, sub-models required by the UE are a local data processing sub-model and a neighbor node data processing sub-model of the permutation equivariant model.

302: The base station receives the first signaling.

The base station BS receives the first signaling from the terminal UE.

303: The base station sends second signaling, where the second signaling indicates a first transmission resource.

The base station allocates the first transmission resource to the UE, so that the UE receives the first sub-model on the first transmission resource.

Optionally, the BS determines, by using sub-model SMDI reported by the UE, whether the BS can provide a sub-model required by the UE. If yes, the UE is allowed to gain access, and the second signaling is sent to the UE.

In a possible implementation, the second signaling includes first description information of the first sub-model corresponding to the first transmission resource. For example, when a plurality of UEs separately send description information of a sub-model to the base station, the base station separately indicates different transmission resources to the plurality of UEs.

The following describes a manner in which the base station determines a terminal that needs to receive the second signaling when a plurality of terminals UEs send the description information of the sub-model to the base station.

1. The base station may determine, based on channel state information, the terminal that needs to receive the second signaling. For example, the plurality of terminals send reference signals to the base station, so that the base station determines each piece of channel state information. The base station may select a terminal with a good channel condition to preferentially send or receive a model.

2. For example, the first signaling further carries local data information of the terminal and/or model performance information of the first sub-model, and the base station may determine, based on at least one of the local data information of the terminal and/or the model performance information of the first sub-model, and the channel state information, to send the second signaling to the terminal.

The model performance information may be sub-model performance information. Alternatively, the model performance information includes full-model performance information and sub-model performance information. The model performance may be inference accuracy of a model.

For example, the base station determines, based on the local data information of the terminal, the terminal that needs to receive the second signaling. For example, the base station schedules and reports, based on a local data modality of each terminal, a sub-model for processing corresponding modal data in the multi-modal network, for example, a video data processing sub-model in a multi-modal data processing model. Alternatively, the base station schedules and reports, based on a local data feature of each terminal, a sub-model for processing corresponding data in a full machine learning model, for example, the eye identification sub-model in the capsule network.

For another example, the base station determines, based on the model performance information of the first sub-model, the terminal that needs to receive the second signaling. For example, the base station sends, based on the model performance information, the second signaling to a terminal with good model performance, and schedules the terminal to report a sub-model with good performance to participate in model training.

3. The base station determines, based on the first description information of the first sub-model and at least one of the following, to send the second signaling to the terminal, so that the base station sends the sub-model to the terminal: an artificial intelligence AI task requirement of the terminal, computing power of the terminal, the local data information of the terminal, and topology information of the network in which the terminal is located.

Alternatively, the base station determines, based on the first description information of the first sub-model and at least one of the following, to send the second signaling to the terminal, so that the base station receives the sub-model from the terminal: an artificial intelligence AI task requirement of the base station, computing power of the base station, local data information of the base station, and topology information of a network in which the base station is located.

For descriptions of this part, refer to the descriptions of the manner in which the UE determines the first sub-model in the first model in step 301. Details are not described herein again. Based on the foregoing determining manner, the base station sends the second signaling to the corresponding terminal.

304: The terminal receives the second signaling.

The UE receives the second signaling from the base station.

305: The base station sends the first sub-model on the first transmission resource.

The base station sends the first sub-model to the UE on the first transmission resource. The first sub-model sent by the base station may be a parameter of the first sub-model, or a structure and a parameter of the first sub-model. This is not limited in this solution.

306: The terminal receives the first sub-model on the first transmission resource.

Correspondingly, the UE receives the first sub-model from the base station on the first transmission resource. The first sub-model received by the UE may be a parameter of the first sub-model, or a structure and a parameter of the first sub-model. This is not limited in this solution.

It should be noted that the foregoing steps 305 and 306 are described by using an example in which the base station sends the first sub-model to the UE. Alternatively, the UE may send the first sub-model to the base station. For example, step 305 may be replaced with the following: The terminal sends the first sub-model on the first transmission resource. Correspondingly, step 306 may be replaced with the following: The base station receives the first sub-model on the first transmission resource. This is not strictly limited in this solution.

In this embodiment of this application, the terminal sends the first signaling to the base station, and the first signaling indicates the first description information of the first sub-model. The base station allocates a transmission resource to the terminal, so that the terminal receives or sends the first sub-model on the transmission resource. Compared with communicating a full-model, in this solution in which the base station and the terminal communicate only a sub-model based on a requirement, communication overheads can be reduced, and description information-based sub-model transmission can improve flexibility of a learning system.

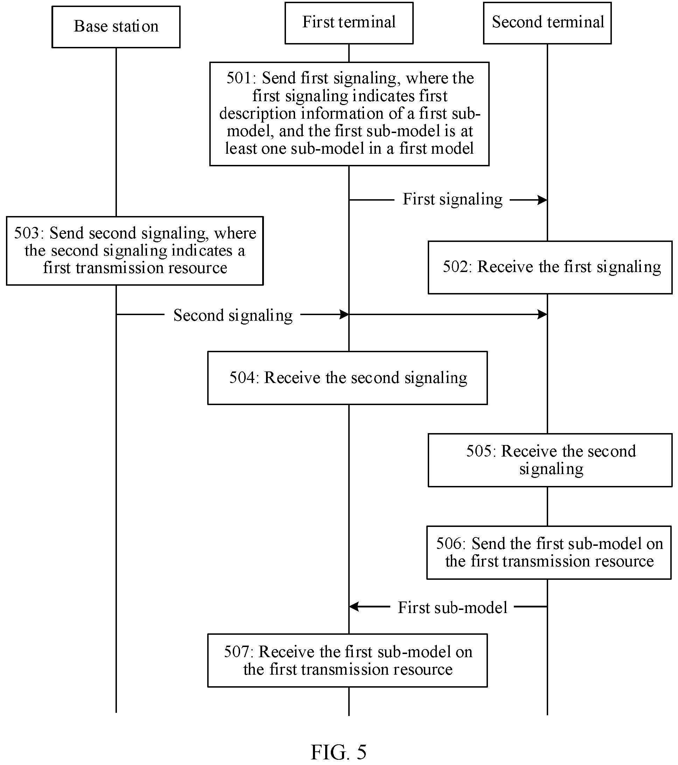

Based on the foregoing embodiment, FIG. 5 is a schematic flowchart of another communication method according to an embodiment of this application. Optionally, the method may be applied to the foregoing communication system, for example, the communication system shown in FIG. 2b. As shown in FIG. 5, the communication method may include steps 501 to 507. It should be understood that, for ease of description in this application, a sequence of 501 to 507 is used for description, but this is not intended to limit execution that is necessary in the foregoing sequence. An execution sequence, execution time, a quantity of execution times, and the like of the foregoing one or more steps are not limited in embodiments of this application. The following uses an example in which steps 501, 504, and 507 of the communication method are performed by a first terminal, and steps 502, 505, and 506 are performed by a second terminal for description. This application is also applicable to other execution bodies. Steps 501 to 507 are specifically as follows.

501: The first terminal sends first signaling, where the first signaling indicates first description information of a first sub-model, and the first sub-model is at least one sub-model in a first model.

For descriptions of this part, refer to the descriptions of step 301 in the embodiment shown in FIG. 3. Details are not described herein again.

502: The second terminal receives the first signaling.

The second terminal receives the first signaling from the first terminal.

503: A base station sends second signaling, where the second signaling indicates a first transmission resource.

Before the base station sends the second signaling, the first terminal or the second terminal sends a "sending request (sending request, SR)" to the base station, to trigger resource allocation of the base station. The base station separately sends the second signaling to the first terminal and the second terminal. A transmission resource is allocated, so that a model is transmitted between the first terminal and the second terminal.

504: The first terminal receives the second signaling.

The first terminal receives the second signaling from the base station. The second signaling indicates the first terminal to receive the first sub-model on the first transmission resource.

505: The second terminal receives the second signaling.

The second signaling indicates the second terminal to send the first sub-model on the first transmission resource.

It should be noted that the foregoing steps 503 to 505 are described by using an example in which the second signaling is indicated by the base station. Alternatively, the second signaling in step 503 may be sent by the second terminal. For example, the second terminal directly sends the second signaling to the first terminal, to indicate the first terminal to receive the first sub-model on the first transmission resource.

Correspondingly, when the second signaling is sent by the second terminal, the first terminal receives the second signaling from the second terminal.

For example, in a device-to-device (Device-to-Device, D2D) direct communication scenario shown in FIG. 2a, the terminal 103 and the terminal 104 may directly communicate with each other on a time-frequency resource preconfigured by a system, and a network device such as a base station does not need to perform resource allocation and scheduling.

506: The second terminal sends the first sub-model on the first transmission resource.

Based on the transmission resource allocated by the base station, the second terminal sends the sub-model on the transmission resource.

The first sub-model sent by the second terminal may be a parameter of the first sub-model, or a structure and a parameter of the first sub-model. This is not limited in this solution.

507: The first terminal receives the first sub-model on the first transmission resource.

Correspondingly, based on the transmission resource allocated by the base station, the first terminal receives the sub-model on the transmission resource.

It should be noted that the foregoing steps 506 and 507 are described by using an example in which the second terminal sends the first sub-model and the first terminal receives the first sub-model. Alternatively, step 506 may be replaced with the following: The first terminal sends the first sub-model on the first transmission resource. Correspondingly, step 507 may be replaced with the following: The second terminal receives the first sub-model on the first transmission resource.

In this embodiment of this application, the first terminal sends the first signaling to the second terminal, and the first signaling indicates the first description information of the first sub-model. Further, the second terminal sends or receives the first sub-model on the transmission resource. Compared with communicating a full-model, in this solution in which the first terminal and the second terminal communicate only a sub-model based on a requirement, communication overheads can be reduced, and description information-based sub-model transmission can improve flexibility of a learning system.

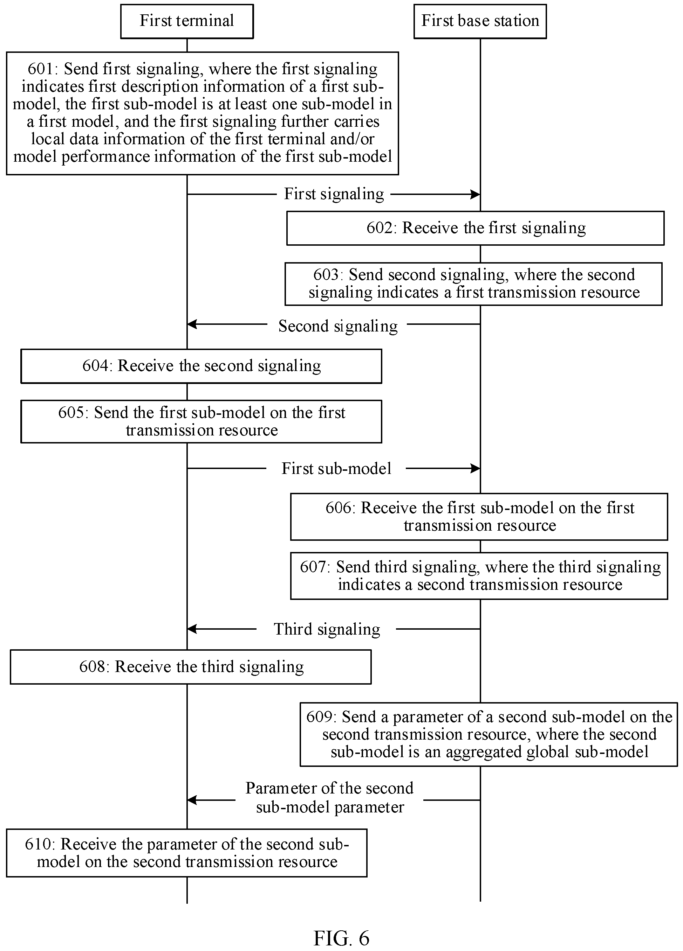

Based on the foregoing embodiment, FIG. 6 is a schematic flowchart of a communication method according to an embodiment of this application. Optionally, the method may be applied to the foregoing communication system, for example, the communication system shown in FIG. 1. As shown in FIG. 6, the communication method may include steps 601 to 610. It should be understood that, for ease of description in this application, a sequence of 601 to 610 is used for description, but this is not intended to limit execution that is necessary in the foregoing sequence. An execution sequence, execution time, a quantity of execution times, and the like of the foregoing one or more steps are not limited in embodiments of this application. The following uses an example in which steps 601, 604, 605, 608, and 610 in the communication method are performed by a first terminal, and steps 602, 603, 606, 607, and 609 are performed by a first base station. This application is also applicable to other execution bodies. Steps 601 to 610 are specifically as follows.

601: The first terminal sends first signaling, where the first signaling indicates first description information of a first sub-model, the first sub-model is at least one sub-model in a first model, and the first signaling further carries local data information of the first terminal and/or model performance information of the first sub-model.

In this example, the first base station and a plurality of terminals construct a federated learning system. Optionally, in the federated learning system, the first base station and the plurality of terminals each have a full neural network model.

Optionally, the first description information includes an identifier of the first model, an identifier of the first sub-model, an identifier of a base station of the first sub-model in the first model in the last update, and an identifier of a terminal of the first sub-model in the first model in the last update. For example, the first description information SMDI is BS(1)-UE(1)-FM(A)-SM(a). Herein, BS(1) represents the first base station, UE(1) represents the first terminal, FM(A) represents a permutation equivariant model, and SM(a) represents a local data processing sub-model.

For descriptions of the first description information of the first sub-model, refer to the related records of step 301 in the embodiment shown in FIG. 3. Details are not described herein again.

For descriptions of the local data information of the first terminal and/or the model performance information of the first sub-model, refer to the related records in step 303 in the embodiment shown in FIG. 3. Details are not described herein again.

602: The first base station receives the first signaling.

The first base station receives the sub-model SMDI, and the local data information of the first terminal and/or the model performance information of the first sub-model that are/is reported by the first terminal.

The first base station may select some terminals from the plurality of terminals that report the sub-model SMDI, and the local data information and/or the model performance information of the sub-model, to participate in a current round of federated training, that is, select some terminals to report a local model.

In a possible implementation, the first base station determines, based on at least one of the local data information of the first terminal and/or the model performance information of the first sub-model, and channel state information, that the first terminal is a terminal selected to participate in the current round of federated training, that is, determines that the first sub-model reported by the first terminal is a sub-model selected to participate in the current round of federated training.

For descriptions of this part, refer to the related records of step 303 in the embodiment shown in FIG. 3. Details are not described herein again.

Certainly, the first base station may alternatively determine all terminals as terminals selected to participate in the current round of federated training. This is not strictly limited in this solution.

603: The first base station sends second signaling, where the second signaling indicates a first transmission resource.

The first base station allocates a transmission resource to the first terminal, so that the first terminal reports the first sub-model of the first terminal on the first transmission resource.

In a possible implementation, the second signaling includes the first description information of the first sub-model corresponding to the first transmission resource. For example, the first base station separately allocates transmission resources to the terminals that are selected to participate in the current round of federated training, so that each terminal separately reports each sub-model on a corresponding transmission resource.

The second signaling may be scheduling signaling. For example, the second signaling may be downlink control information (downlink control information, DCI). Optionally, an SMDI field may be added to the DCI, to indicate a corresponding terminal to report a corresponding sub-model on the transmission resource.

604: The first terminal receives the second signaling.

605: The first terminal sends the first sub-model on the first transmission resource.

For example, the second signaling is scheduling signaling. The first terminal receives the scheduling signaling, and sends, based on an SMDI field in the scheduling signaling and on the first transmission resource indicated by the scheduling signaling, a parameter of the first sub-model corresponding to the SMDI.

606: The first base station receives the first sub-model on the first transmission resource.

Correspondingly, the first base station receives the parameter of the first sub-model on the first transmission resource.

The first base station receives local sub-models reported by the terminals, and performs model aggregation processing based on SMDI corresponding to these sub-models.

For example, the first base station aggregates sub-models whose FMID fields and SMID fields are completely the same in SMDI. The aggregation may be performing weighted averaging processing on parameters of the first sub-model whose FMID field and SMID field are completely the same in SMDI, to obtain a global sub-model. For example, description information of the global sub-model corresponding to the first sub-model may be expressed as BS(1)-UE(0)-FM(A)-SM(a). After performing aggregation processing, the base station sets the identifier of the terminal that last updates the first sub-model in the first model to a default value 0, that is, UE(0).

Alternatively, the first base station combines all local sub-models reported by the terminals into a local full-model, and performs aggregation processing, to obtain a global full-model and a global sub-model in the global full-model.

607: The first base station sends third signaling, where the third signaling indicates a second transmission resource.

The first base station delivers the model obtained through the aggregation processing. For example, the first base station may indicate, to the terminal that participates in the current round of federated training by using the DCI, SMDI and a transmission resource location of a model delivered by the terminal.

608: The first terminal receives the third signaling.

609: The first base station sends a parameter of a second sub-model on the second transmission resource, where the second sub-model is an aggregated global sub-model.

The first base station may separately deliver, to each terminal, a global sub-model corresponding to the terminal in the aggregated global full-model. For example, for the first terminal, the first base station may deliver only the first sub-model of the aggregated global full-model to the first terminal.

Certainly, the first base station may alternatively directly deliver the aggregated global full-model to each terminal. This is not strictly limited in this solution.

610: The first terminal receives the parameter of the second sub-model on the second transmission resource.

The first terminal receives the second sub-model at a given transmission resource location based on an indication of the DCI, and performs next-step local training. The first terminal updates the local model based on the received second sub-model. For example, description information of the updated sub-model may be expressed as BS(1)-UE(1)-FM(A)-SM(a).

The foregoing steps 602, 606, and 609 are described by using an example in which the first base station is used as an execution body. It should be noted that when the learning system for model training and the communication system are implemented on different devices, steps 602, 606, and 609 may be alternatively performed by another device, for example, an aggregation node device. This is not strictly limited in this solution.

The foregoing example is described by using an example in which the first base station and the plurality of terminals including the first terminal perform federated training. Optionally, based on the foregoing example, this application further provides a bidirectional federated training method. In other words, in addition to performing federated training with the first base station, the first terminal further performs federated training with the second base station. For example, the first terminal accesses a second base station when moving to a coverage area of the second base station. The first terminal may request, from the second base station, a sub-model required by the first terminal. The method further includes:

A1: The first terminal sends fourth signaling to the second base station, where the fourth signaling indicates second description information of the first sub-model, the second description information of the first sub-model further includes an identifier of a fourth node, the fourth node is a node that last updates the first sub-model in the first model, and the fourth node is different from the third node.

For example, the second description information SMDI is BS(2)-UE(0)-FM(A)-SM(a). Herein, BS(2) represents the second base station, UE(0) represents that the base station performs aggregation processing, FM(A) represents a permutation equivariant model, and SM(a) represents a local data processing sub-model.

A2: The second base station sends fifth signaling, where the fifth signaling indicates a third transmission resource.

After receiving a sub-model request sent by the first terminal, the second base station allocates a transmission resource to the first terminal, to indicate the first terminal to receive a sub-model on the transmission resource.

A3: The first terminal receives the fifth signaling.

A4: The first terminal receives the parameter of the first sub-model on the third transmission resource.

The first terminal receives, on the third transmission resource, the first sub-model sent by the second base station. Optionally, the first terminal aggregates the first sub-model from the second base station and the first sub-model from the first base station, to obtain an updated local sub-model. For example, description information SMDI of the updated local sub-model is BS(0)-UE(1)-FM(A)-SM(a). After performing aggregation processing, a terminal side sets the identifier of the base station that last updates the first sub-model in the first model to a default value 0, that is, BS(0).

In this embodiment of this application, for a federated training system or a bidirectional federated training system, the terminal and the base station indicate a required sub-model by using description information of the sub-model. Further, compared with communicating a full-model, in this embodiment in which the terminal and the base station communicate only a sub-model based on a requirement, communication overheads can be reduced, and SMDI-based sub-model transmission can improve flexibility of a distributed learning system.

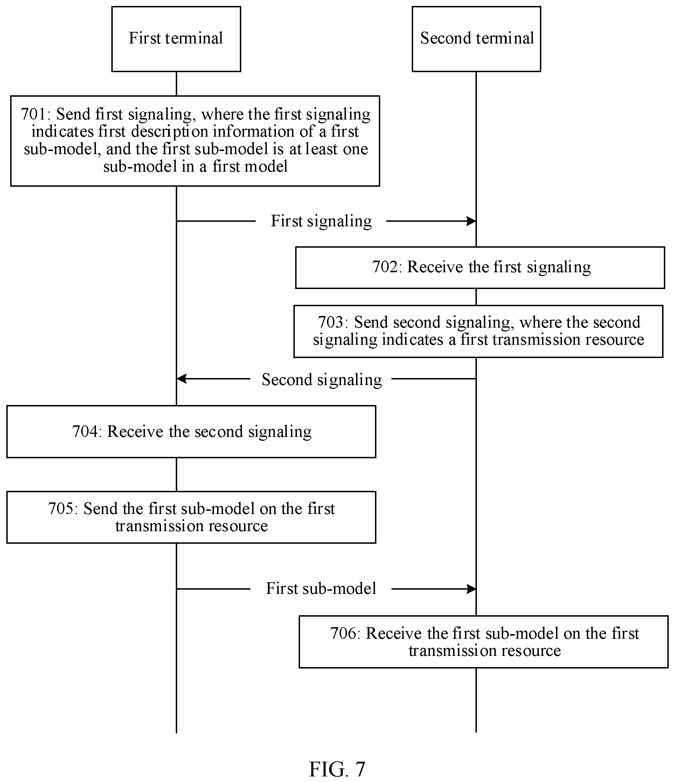

Based on the foregoing embodiment, FIG. 7 is a schematic flowchart of still another communication method according to an embodiment of this application. Optionally, the method may be applied to the foregoing communication system, for example, the communication system shown in FIG. 2a. As shown in FIG. 7, the communication method may include steps 701 to 706. It should be understood that, for ease of description in this application, a sequence of 701 to 706 is used for description, but this is not intended to limit execution that is necessary in the foregoing sequence. An execution sequence, execution time, a quantity of execution times, and the like of the foregoing one or more steps are not limited in embodiments of this application. The following uses an example in which steps 701, 704, and 705 in the communication method are performed by a first terminal, and steps 702, 703, and 706 are performed by a second terminal for description. This application is also applicable to other execution bodies. Steps 701 to 706 are specifically as follows.

701: The first terminal sends first signaling, where the first signaling indicates first description information of a first sub-model, and the first sub-model is at least one sub-model in a first model.

In this example, the first terminal and the second terminal may construct a decentralized learning system. Each terminal in the system performs local training and interacts with another terminal, to sequentially obtain a full machine learning model through training.

For descriptions of this step, refer to the descriptions of step 301 in the embodiment shown in FIG. 3. Details are not described herein again.

Optionally, the first terminal may send the first signaling in a broadcasting manner. The first terminal may further send the first description information of the first sub-model by adding an SMDI field to other signaling (for example, sidelink control information (Sidelink control information, SCI)).

702: The second terminal receives the first signaling.

703: The second terminal sends second signaling to the first terminal, where the second signaling indicates a first transmission resource.

Optionally, the second terminal receives SMDI from a plurality of terminals. The second terminal may determine a sub-model required by the second terminal.

For example, the second terminal determines, based on the first description information of the first sub-model and at least one of the following, the sub-model required by the second terminal:

an artificial intelligence AI task requirement of the second terminal, computing power of the second terminal, local data information of the second terminal, and topology information of a network in which the second terminal is located.

For descriptions of this part, refer to the descriptions of step 301 in the embodiment shown in FIG. 3. Details are not described herein again.

The second terminal determines the sub-model required by the second terminal, and may send the second signaling (that is, sub-model request signaling) to a corresponding terminal. For example, the second terminal may send SCI signaling. The SCI signaling indicates the first terminal to send the first sub-model on the first transmission resource.

704: The first terminal receives the second signaling.

705: The first terminal sends the first sub-model on the first transmission resource.

The first terminal sends, based on the received sub-model request signaling, the first sub-model to the second terminal on the first transmission resource indicated by the signaling.

The first terminal may send a parameter of the first sub-model, or a structure and a parameter of the first sub-model, or the like to the second terminal. This is not limited in this solution.

706: The second terminal receives the first sub-model on the first transmission resource.

The second terminal performs local training based on the received first sub-model.

Compared with communicating a full-model, in this embodiment of this application in which for the decentralized learning system, terminals communicate only a sub-model based on a requirement, communication overheads can be reduced, SMDI-based sub-model transmission can improve flexibility of a distributed learning system, and description information-based sub-model transmission can improve flexibility of the distributed learning system.

It should be noted that, in various embodiments of this application, unless otherwise stated or there is a logic conflict, terms and/or descriptions in various embodiments are consistent and may be mutually referenced, and technical features in different embodiments may be combined based on an internal logical relationship thereof, to form a new embodiment. This is not limited in this solution.

The methods in embodiments of this application are described in detail above. Apparatuses in embodiments of this application are provided below. It may be understood that, in the apparatus embodiments of this application, division into a plurality of units or modules is merely logical division based on functions, and is not intended to limit a specific structure of the apparatus. During specific implementation, some functional modules may be subdivided into more functional modules that are smaller, and some functional modules may also be combined into one functional module. However, regardless of whether these functional modules are subdivided or combined, a general procedure performed by the apparatus is the same. For example, some apparatuses include a receiving unit and a sending unit. In some designs, the sending unit and the receiving unit may alternatively be integrated into a communication unit, and the communication unit may implement functions implemented by the receiving unit and the sending unit. Usually, each unit corresponds to respective program code (or program instructions). When the program code corresponding to the unit is run on a processor, the unit is controlled by a processing unit to perform a corresponding procedure to implement a corresponding function.

An embodiment of this application further provides an apparatus configured to implement any one of the foregoing methods. For example, a communication apparatus is provided, including modules (or means) configured to implement steps performed by the terminal in the method shown in FIG. 3, and the first terminal in the methods shown in FIG. 5, FIG. 6, and FIG. 7. For another example, another communication apparatus is further provided, including modules (or means) configured to implement steps performed by the base station in the method shown in FIG. 3, the second terminal in the methods shown in FIG. 5 and FIG. 7, and the first base station in the method shown in FIG. 6.

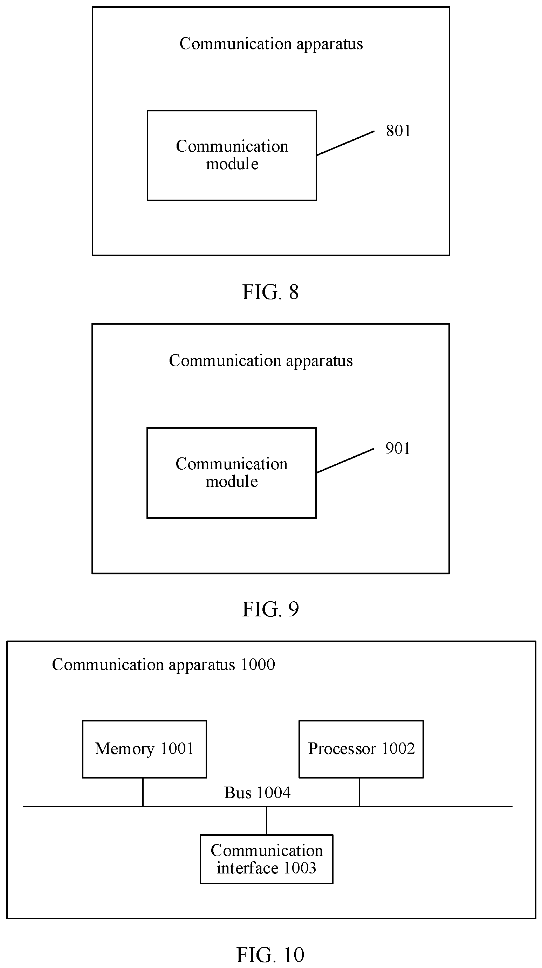

For example, FIG. 8 is a diagram of a structure of a communication apparatus according to an embodiment of this application. The communication apparatus is configured to implement the foregoing communication methods, for example, the communication methods shown in FIG. 3, FIG. 5, FIG. 6, and FIG. 7.

As shown in FIG. 8, the apparatus may include a communication module 801, which is specifically as follows:

The communication module 801 is configured to:

> send first signaling, where the first signaling indicates first description information of a first sub-model, and the first sub-model is at least one sub-model in a first model;
> receive second signaling, where the second signaling indicates a first transmission resource; and
> send or receive the first sub-model on the first transmission resource.

In a possible implementation, the first description information of the first sub-model includes at least one of the following information:

an identifier of the first sub-model and an identifier of the first model.

Further, the first description information of the first sub-model further includes an identifier of a third node, and the third node is a node that last updates the first sub-model in the first model.

In a possible implementation, the apparatus further includes a processing module, configured to:

determine the first sub-model in the first model based on at least one of the following:

an artificial intelligence AI task requirement of the apparatus, computing power of the apparatus, local data information of the apparatus, and topology information of a network in which the apparatus is located.

In a possible implementation, the first signaling further carries the local data information of the apparatus and/or model performance information of the first sub-model, and the communication module 801 is further configured to:

> receive third signaling, where the third signaling indicates a second transmission resource; and
> receive a parameter of a second sub-model on the second transmission resource, where the second sub-model is an aggregated global sub-model.

In a possible implementation, the first description information of the first sub-model further includes an identifier of a third node, the third node is a node that last updates the first sub-model in the first model, and the communication module 801 is further configured to:

> send fourth signaling, where the fourth signaling indicates second description information of the first sub-model, the second description information of the first sub-model further includes an identifier of a fourth node, the fourth node is a node that last updates the first sub-model in the first model, and the fourth node is different from the third node;
> receive fifth signaling, where the fifth signaling indicates a third transmission resource; and
> receive a parameter of the first sub-model on the third transmission resource.

In a possible implementation, the first description information includes a full-model identification FMID field and a sub-model identification SMID field, and an FMID indicates a different artificial intelligence AI task.

Further, an SMID is a single-level index or a multi-level index.

In a possible implementation, when a model used for the AI task is a single-level model, the SMID is a single-level index.

In a possible implementation, when a model used for the AI task is a multi-level model, the SMID is a multi-level index.

In a possible implementation, the first signaling is a random access request, and the first description information corresponds to a random access preamble sequence used by the random access request.

In a possible implementation, the second signaling includes the first description information of the first sub-model corresponding to the first transmission resource.

For descriptions of the foregoing modules, refer to the descriptions of the foregoing embodiments. Details are not described herein.

For another example, FIG. 9 is a diagram of a structure of another communication apparatus according to an embodiment of this application. The communication apparatus is configured to implement the foregoing communication methods, for example, the communication methods shown in FIG. 3, FIG. 5, FIG. 6, and FIG. 7.

As shown in FIG. 9, the apparatus may include a communication module 901, which is specifically as follows:

The communication module 901 is configured to:

receive first signaling, where the first signaling indicates first description information of a first sub-model, and the first sub-model is at least one sub-model in a first model; and
receive or send the first sub-model on a first transmission resource.

In a possible implementation, the communication module 901 is further configured to:
send second signaling, where the second signaling indicates the first transmission resource.

In a possible implementation, the first signaling further carries local data information of a first node and/or model performance information of the first sub-model, and the apparatus further includes a processing module, configured to:
determine, based on at least one of the local data information of the first node and/or the model performance information of the first sub-model, and channel state information, to send the second signaling to the first node.

In a possible implementation, the apparatus further includes a processing module, configured to:
determine, based on the first description information of the first sub-model and at least one of the following, to send the second signaling to the first node:
an artificial intelligence AI task requirement of the first node, computing power of the first node, the local data information of the first node, and topology information of a network in which the first node is located.

Alternatively, the apparatus further includes a processing module, configured to:
determine, based on the first description information of the first sub-model and at least one of the following, to send the second signaling to the first node:
an artificial intelligence AI task requirement of the apparatus, computing power of the apparatus, local data information of the apparatus, and topology information of a network in which the apparatus is located.

In a possible implementation, the communication module 901 is further configured to:
receive second signaling, where the second signaling indicates the first transmission resource.

In a possible implementation, the second signaling includes the first description information of the first sub-model corresponding to the first transmission resource.

In a possible implementation, the first description information of the first sub-model includes at least one of the following information:
an identifier of the first sub-model and an identifier of the first model.

In a possible implementation, the first description information of the first sub-model further includes an identifier of a third node, and the third node is a node that last updates the first sub-model in the first model.

In a possible implementation, the communication module 901 is further configured to:

send third signaling, where the third signaling indicates a second transmission resource; and
send a parameter of a second sub-model on the second transmission resource, where the second sub-model is an aggregated global sub-model.

In a possible implementation, the first description information includes a full-model identification FMID field and a sub-model identification SMID field, and an FMID indicates a different artificial intelligence AI task.

In a possible implementation, an SMID is a single-level index or a multi-level index.

In a possible implementation, when a model used for the AI task is a single-level model, the SMID is a single-level index.

In a possible implementation, when a model used for the AI task is a multi-level model, the SMID is a multi-level index.

For descriptions of the foregoing modules, refer to the descriptions of the foregoing embodiments. Details are not described herein.

It should be understood that division of the modules in the foregoing apparatus is merely logical function division. During actual implementation, all or some of the modules may be integrated into one physical entity, or may be physically separated. In addition, the modules in the communication apparatus may be implemented in a form of software invoked by a processor. For example, the communication apparatus includes a processor. The processor is connected to a memory. The memory stores instructions. The processor invokes the instructions stored in the memory, to implement any one of the foregoing methods or implement functions of each module of the apparatus. The processor is, for example, a general-purpose processor, for example, a central processing unit (central processing unit, CPU) or a microprocessor. The memory is a memory inside the apparatus or a memory outside the apparatus. Alternatively, the module in the apparatus may be implemented in a form of a hardware circuit, and functions of some or all units may be implemented by designing the hardware circuit. The hardware circuit may be understood as one or more processors. For example, in an implementation, the hardware circuit is an application-specific integrated circuit (application-specific integrated circuit, ASIC), and the functions of some or all of the foregoing units are implemented by designing a logical relationship between elements in the circuit. For another example, in another implementation, the hardware circuit may be implemented by using a programmable logic device (programmable logic device, PLD). A field programmable gate array (field programmable gate array, FPGA) is used as an example, and the field programmable gate array may include a large quantity of logic gate circuits. A configuration file is used to configure a connection relationship between logic gate circuits, to implement functions of some or all of the foregoing units. All the modules of the foregoing apparatus may be implemented in a form of software invoked by the processor, or all the modules may be implemented in a form of the hardware circuit, or some modules may be implemented in a form of software invoked by the processor, and a remaining part may be implemented in a form of the hardware circuit.

FIG. 10 is a diagram of a hardware structure of still another communication apparatus according to an embodiment of this application. The communication apparatus 1000 (the apparatus 1000 may specifically be a computer device) shown in FIG. 10 includes a memory 1001, a processor 1002, a communication interface 1003, and a bus 1004. The memory 1001, the processor 1002, and the communication interface 1003 are communicatively connected to each other through the bus 1004.

The memory 1001 may be a read-only memory (read-only memory, ROM), a static storage device, a dynamic storage device, or a random access memory (random access memory, RAM).

The memory 1001 may store a program. When the program stored in the memory 1001 is executed by the processor 1002, the processor 1002 and the communication interface 1003 are configured to perform the steps of the communication method in embodiments of this application.

The processor 1002 is a circuit having a signal processing capability. In an implementation, the processor 1002 may be a circuit having an instruction reading and running capability, for example, a central processing unit CPU, a microprocessor, a graphics processing unit (graphics processing unit, GPU) (which may be understood as a microprocessor), or a digital signal processor (digital signal processor, DSP). In another implementation, the processor 1002 may implement a specific function by using a logical relationship of a hardware circuit, and the logical relationship of the hardware circuit is fixed or reconfigurable. For example, the processor 1002 is a hardware circuit implemented by an ASIC or a programmable logic device PLD, for example, an FPGA. In the reconfigurable hardware circuit, a process in which the processor loads a configuration document to implement hardware circuit configuration may be understood as a process in which the processor loads instructions to implement functions of some or all of the foregoing modules. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). The processor 1002 is configured to execute a related program, to implement functions that need to be performed by the units in the communication apparatus in embodiments of this application, or perform the communication method in the method embodiments of this application.

It can be learned that each module in the foregoing apparatus may be one or more processors (or processing circuits) configured to implement the foregoing method, for example, a CPU, a GPU, an NPU, a TPU, a DPU, a microprocessor, a DSP, an ASIC, an FPGA, or a combination of at least two of these processor forms.

In addition, all or some of the modules of the apparatus may be integrated, or may be implemented independently. In an implementation, the modules may be integrated together and implemented in a form of a system-on-a-chip (system-on-a-chip, SoC). The SoC may include at least one processor, configured to implement any one of the methods or implement functions of the modules of the apparatus. Types of the at least one processor may be different, for example, the at least one processor includes a CPU and an FPGA, a CPU and an artificial intelligence processor, or a CPU and a GPU.

The communication interface 1003 uses a transceiver apparatus, for example but not for limitation, a transceiver, to implement communication between the apparatus 1000 and another device or a communication network. For example, data may be obtained through the communication interface 1003.

The bus 1004 may include a path for transmitting information between the components (for example, the memory 1001, the processor 1002, and the communication interface 1003) of the apparatus 1000.

It should be noted that although only the memory, the processor, and the communication interface are shown in the apparatus 1000 shown in FIG. 10, in a specific implementation process, a person skilled in the art should understand that the apparatus 1000 further includes other components necessary for implementing normal operation. In addition, based on a specific requirement, a person skilled in the art should understand that the apparatus 1000 may further include hardware components for implementing other additional functions. In addition, a person skilled in the art should understand that the apparatus 1000 may alternatively include only components required for implementing embodiments of this application, but does not necessarily include all the components shown in FIG. 10.

An embodiment of this application further provides a communication apparatus. The communication apparatus includes one or more processors, and the one or more processors are configured to execute a computer program stored in one or more memories, so that the communication apparatus implements the method according to any implementation in the first aspect or the method according to any implementation in the second aspect.

In a possible implementation, the communication apparatus further includes the one or more memories.

In a possible implementation, the communication apparatus is a chip or a chip system.

An embodiment of this application further provides a computer-readable storage medium. The computer-readable storage medium stores instructions, and when the instructions are run on a computer or a processor, the computer or the processor is enabled to perform one or more steps in any one of the foregoing methods.

An embodiment of this application further provides a computer program product including instructions. When the computer program product runs on a computer or a processor, the computer or the processor is enabled to perform one or more steps in any one of the foregoing methods.

It may be clearly understood by a person skilled in the art that, for the purpose of convenient and brief description, for a detailed working process of the foregoing system, apparatus, and unit, refer to the specific description of a corresponding step process in the foregoing method embodiments. Details are not described herein again.

It should be understood that unless otherwise specified, "/" in descriptions of this application indicates an "or" relationship between associated objects. For example, A/B may indicate A or B, where A and B may be singular or plural. In addition, in the descriptions of this application, "a plurality of" means two or more than two unless otherwise specified. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the words such as "first" and "second" do not limit a quantity or an execution sequence, and the words such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In the several embodiments provided in this application, it should be understood that the disclosed system, apparatus, and method may be implemented in other manners. For example, division into the units is merely logical function division and may be other division during actual implementation. For example, a plurality of units or components may be combined or integrated into another system, or some features may be ignored or not performed. The displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

All or some of the foregoing embodiments may be implemented by using software, hardware, firmware, or any combination thereof. When software is used to implement embodiments, all or a part of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a special-purpose computer, a computer network, or another programmable apparatus. The computer instructions may be stored in a computer-readable storage medium, or transmitted through the computer-readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a read-only memory (read-only memory, ROM), a random access memory (random access memory, RAM), or a magnetic medium, for example, a floppy disk, a hard disk, a magnetic tape, a magnetic disk, or an optical medium, for example, a digital versatile disc (digital versatile disc, DVD), or a semiconductor medium, for example, a solid-state disk (solid-state disk, SSD).

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

**Claims**

1.  A communication method, comprising:

    sending, by a first node, first signaling, wherein the first signaling indicates first description information of a first sub-model, and the first sub-model is at least one sub-model in a first model;
    receiving, by the first node, second signaling, wherein the second signaling indicates a first transmission resource; and
    sending or receiving, by the first node, the first sub-model on the first transmission resource.

2.  The method according to claim 1, wherein the first description information of the first sub-model comprises at least one of the following information:
    an identifier of the first sub-model or an identifier of the first model.

3.  The method according to claim 2, wherein the first description information of the first sub-model further comprises an identifier of a third node, and the third node is a node that last updates the first sub-model in the first model.

4.  The method according to any one of claims 1 to 3, wherein the method further comprises:
    determining, by the first node, the first sub-model in the first model based on at least one of the following:
    an artificial intelligence AI task requirement of the first node, computing power of the first node, local data information of the first node, and topology information of a network in which the first node is located.

5.  The method according to any one of claims 1 to 4, wherein the first signaling further carries the local data information of the first node and/or model performance information of the first sub-model, and the method further comprises:

    receiving, by the first node, third signaling, wherein the third signaling indicates a second transmission resource; and
    receiving, by the first node, a parameter of a second sub-model on the second transmission resource, wherein the second sub-model is an aggregated global sub-model.

6.  The method according to claim 5, wherein the first description information of the first sub-model further comprises an identifier of a third node, the third node is a node that last updates the first sub-model in the first model, and the method further comprises:

    sending, by the first node, fourth signaling, wherein the fourth signaling indicates second description information of the first sub-model, the second description information of the first sub-model further comprises an identifier of a fourth node, the fourth node is a node that last updates the first sub-model in the first model, and the fourth node is different from the third node;
    receiving, by the first node, fifth signaling, wherein the fifth signaling indicates a third transmission resource; and
    receiving, by the first node, a parameter of the first sub-model on the third transmission resource.

7.  The method according to any one of claims 1 to 6, wherein the first description information comprises a full-model identification FMID field and a sub-model identification SMID field, and the FMID field indicates a different artificial intelligence AI task.

8. The method according to claim 7, wherein the SMID is a single-level index or a multi-level index.

9. The method according to claim 8, wherein when a model used for the AI task is a single-level model, the SMID is a single-level index.

10. The method according to claim 8 or 9, wherein when a model used for the AI task is a multi-level model, the SMID is a multi-level index.

11. The method according to claim 1, wherein the first signaling is a random access request, and the first description information corresponds to a random access preamble sequence used by the random access request.

12. The method according to any one of claims 1 to 11, wherein the second signaling comprises the first description information of the first sub-model corresponding to the first transmission resource.

13. A communication method, comprising:

   receiving, by a second node, first signaling, wherein the first signaling indicates first description information of a first sub-model, and the first sub-model is at least one sub-model in a first model; and
   receiving or sending, by the second node, the first sub-model on a first transmission resource.

14. The method according to claim 13, wherein the method further comprises:
   sending, by the second node, second signaling, wherein the second signaling indicates the first transmission resource.

15. The method according to claim 14, wherein the first signaling further carries local data information of a first node and/or model performance information of the first sub-model, and the method further comprises:
   determining, by the second node based on at least one of the local data information of the first node and/or the model performance information of the first sub-model, and channel state information, to send the second signaling to the first node.

16. The method according to claim 14, wherein the method further comprises:
   determining, by the second node based on the first description information of the first sub-model and at least one of the following, to send the second signaling to a first node:
   an artificial intelligence AI task requirement of the first node, computing power of the first node, local data information of the first node, and topology information of a network in which the first node is located.

17. The method according to claim 13, wherein the method further comprises:
   receiving, by the second node, second signaling, wherein the second signaling indicates the first transmission resource.

18. The method according to any one of claims 14 to 17, wherein the second signaling comprises the first description information of the first sub-model corresponding to the first transmission resource.

19. The method according to any one of claims 13 to 18, wherein the first description information of the first sub-model comprises at least one of the following information:
   an identifier of the first sub-model and an identifier of the first model.

20. The method according to claim 19, wherein the first description information of the first sub-model further comprises an identifier of a third node, and the third node is a node that last updates the first sub-model in the first model.

21. The method according to any one of claims 13 to 20, wherein the method further comprises:

   sending, by the second node, third signaling, wherein the third signaling indicates a second transmission resource; and
   sending, by the second node, a parameter of a second sub-model on the second transmission resource, wherein the second sub-model is an aggregated global sub-model.

22. The method according to any one of claims 13 to 21, wherein the first description information comprises a full-model identification FMID field and a sub-model identification SMID field, and the FMID indicates a different artificial intelligence AI task.

23. The method according to claim 22, wherein the SMID is a single-level index or a multi-level index.

24. The method according to claim 23, wherein when a model used for the AI task is a single-level model, the SMID is a single-level index.

25. The method according to claim 23 or 24, wherein when a model used for the AI task is a multi-level model, the SMID is a multi-level index.

26. A communication apparatus, comprising a communication module, configured to:

send first signaling, wherein the first signaling indicates first description information of a first sub-model, and the first sub-model is at least one sub-model in a first model;
receive second signaling, wherein the second signaling indicates a first transmission resource; and
send or receive the first sub-model on the first transmission resource.

27. The apparatus according to claim 26, wherein the first description information of the first sub-model comprises at least one of the following information:
an identifier of the first sub-model and an identifier of the first model.

28. The apparatus according to claim 27, wherein the first description information of the first sub-model further comprises an identifier of a third node, and the third node is a node that last updates the first sub-model in the first model.

29. The apparatus according to any one of claims 26 to 28, wherein the apparatus further comprises a processing module, configured to:
determine the first sub-model in the first model based on at least one of the following:
an artificial intelligence AI task requirement of the apparatus, computing power of the apparatus, local data information of the apparatus, and topology information of a network in which the apparatus is located.

30. The apparatus according to any one of claims 26 to 29, wherein the first signaling further carries the local data information of the apparatus and/or model performance information of the first sub-model, and the communication module is further configured to:

receive third signaling, wherein the third signaling indicates a second transmission resource; and
receive a parameter of a second sub-model on the second transmission resource, wherein the second sub-model is an aggregated global sub-model.

31. The apparatus according to claim 30, wherein the first description information of the first sub-model further comprises an identifier of a third node, the third node is a node that last updates the first sub-model in the first model, and the communication module is further configured to:

send fourth signaling, wherein the fourth signaling indicates second description information of the first sub-model, the second description information of the first sub-model further comprises an identifier of a fourth node, the fourth node is a node that last updates the first sub-model in the first model, and the fourth node is different from the third node;
receive fifth signaling, wherein the fifth signaling indicates a third transmission resource; and
receive a parameter of the first sub-model on the third transmission resource.

32. The apparatus according to any one of claims 26 to 31, wherein the first description information comprises a full-model identification FMID field and a sub-model identification SMID field, and the FMID indicates a different artificial intelligence AI task.

33. The apparatus according to claim 32, wherein the SMID is a single-level index or a multi-level index.

34. The apparatus according to claim 33, wherein when a model used for the AI task is a single-level model, the SMID is a single-level index.

35. The apparatus according to claim 33 or 34, wherein when a model used for the AI task is a multi-level model, the SMID is a multi-level index.

36. The apparatus according to claim 26, wherein the first signaling is a random access request, and the first description information corresponds to a random access preamble sequence used by the random access request.

37. The apparatus according to any one of claims 26 to 36, wherein the second signaling comprises the first description information of the first sub-model corresponding to the first transmission resource.

38. A communication apparatus, comprising a communication module, configured to:

   receive first signaling, wherein the first signaling indicates first description information of a first sub-model, and the first sub-model is at least one sub-model in a first model; and
   receive or send the first sub-model on a first transmission resource.

39. The apparatus according to claim 38, wherein the communication module is further configured to:
   send second signaling, wherein the second signaling indicates the first transmission resource.

40. The apparatus according to claim 39, wherein the first signaling further carries local data information of a first node and/or model performance information of the first sub-model, and the apparatus further comprises a processing module, configured to:
   determine, based on at least one of the local data information of the first node and/or the model performance information of the first sub-model, and channel state information, to send the second signaling to the first node.

41. The apparatus according to claim 39, wherein the apparatus further comprises a processing module, configured to:
   determine, based on the first description information of the first sub-model and at least one of the following, to send the second signaling to a first node:
   an artificial intelligence AI task requirement of the first node, computing power of the first node, local data information of the first node, and topology information of a network in which the first node is located.

42. The apparatus according to claim 38, wherein the communication module is further configured to:
   receive second signaling, wherein the second signaling indicates the first transmission resource.

43. The apparatus according to any one of claims 39 to 42, wherein the second signaling comprises the first description information of the first sub-model corresponding to the first transmission resource.

44. The apparatus according to any one of claims 38 to 43, wherein the first description information of the first sub-model comprises at least one of the following information:
   an identifier of the first sub-model and an identifier of the first model.

45. The apparatus according to claim 44, wherein the first description information of the first sub-model further comprises an identifier of a third node, and the third node is a node that last updates the first sub-model in the first model.

46. The apparatus according to any one of claims 38 to 45, wherein the communication module is further configured to:

   send third signaling, wherein the third signaling indicates a second transmission resource; and
   send a parameter of a second sub-model on the second transmission resource, wherein the second sub-model is an aggregated global sub-model.

47. The apparatus according to any one of claims 38 to 46, wherein the first description information comprises a full-model identification FMID field and a sub-model identification SMID field, and the FMID indicates a different artificial intelligence AI task.

48. The apparatus according to claim 47, wherein the SMID is a single-level index or a multi-level index.

49. The apparatus according to claim 48, wherein when a model used for the AI task is a single-level model, the SMID is a single-level index.

50. The apparatus according to claim 48 or 49, wherein when a model used for the AI task is a multi-level model, the SMID is a multi-level index.

51. A communication apparatus, wherein the communication apparatus comprises one or more processors, and the one or more processors are configured to execute a computer program stored in one or more memories, so that the communication apparatus implements the method according to any one of claims 1 to 12, or implements the method according to any one of claims 13 to 25.

52. The communication apparatus according to claim 51, wherein the communication apparatus further comprises the one or more memories.

53. The communication apparatus according to claim 51 or 52, wherein the communication apparatus is a chip or a chip system.

54. A computer-readable storage medium, wherein the computer-readable storage medium stores instructions, and when the instructions are executed by a processor, the method according to any one of claims 1 to 12 is implemented, or the method according to any one of claims 13 to 25 is implemented.

55. A computer program product, comprising a computer program, wherein when the computer program is executed, the method according to any one of claims 1 to 12 is implemented, or the method according to any one of claims 13 to 25 is implemented.

56. A communication system, comprising the apparatus according to any one of claims 26 to 37 and the apparatus according to any one of claims 38 to 50.

EP 4 625 911 A1

FIG. 1

FIG. 2a

FIG. 2b

FIG. 3

FIG. 4a

FIG. 4b

Video processing sub-model

Audio processing sub-model

Fusion processing sub-model

Text processing sub-model

FIG. 4c

X → First-level network → $Y_1$ → Second-level network → $Y_2$ → ... → $n^{th}$-level network → $Y_n$ →

FIG. 4d

$X_T$ → ... → $X_t$ → $p_{\theta}(X_{t-1}|X_t)$ → $X_{t-1}$ → ... → $X_0$

FIG. 4e

| Base station | First terminal | Second terminal |
|---|---|---|

501: Send first signaling, where the first signaling indicates first description information of a first sub-model, and the first sub-model is at least one sub-model in a first model

⟶ First signaling ⟶

503: Send second signaling, where the second signaling indicates a first transmission resource

502: Receive the first signaling

⟶ Second signaling ⟶

504: Receive the second signaling

505: Receive the second signaling

506: Send the first sub-model on the first transmission resource

⟵ First sub-model ⟵

507: Receive the first sub-model on the first transmission resource

FIG. 5

First terminal

First base station

601: Send first signaling, where the first signaling indicates first description information of a first sub-model, the first sub-model is at least one sub-model in a first model, and the first signaling further carries local data information of the first terminal and/or model performance information of the first sub-model

First signaling →

602: Receive the first signaling

603: Send second signaling, where the second signaling indicates a first transmission resource

← Second signaling

604: Receive the second signaling

605: Send the first sub-model on the first transmission resource

First sub-model →

606: Receive the first sub-model on the first transmission resource

607: Send third signaling, where the third signaling indicates a second transmission resource

← Third signaling

608: Receive the third signaling

609: Send a parameter of a second sub-model on the second transmission resource, where the second sub-model is an aggregated global sub-model

← Parameter of the second sub-model parameter

610: Receive the parameter of the second sub-model on the second transmission resource

FIG. 6

First terminal

Second terminal

701: Send first signaling, where the first signaling indicates first description information of a first sub-model, and the first sub-model is at least one sub-model in a first model

First signaling

702: Receive the first signaling

703: Send second signaling, where the second signaling indicates a first transmission resource

Second signaling

704: Receive the second signaling

705: Send the first sub-model on the first transmission resource

First sub-model

706: Receive the first sub-model on the first transmission resource

FIG. 7

Communication apparatus

Communication
module

801

FIG. 8

Communication apparatus

Communication
module

901

FIG. 9

Communication apparatus 1000

Memory 1001

Processor 1002

Bus 1004

Communication
interface 1003

FIG. 10

## INTERNATIONAL SEARCH REPORT

| | International application No. |
|---|---|
| | **PCT/CN2022/140128** |

| A. | CLASSIFICATION OF SUBJECT MATTER |
|---|---|
| | H04L 27/00(2006.01)i |

According to International Patent Classification (IPC) or to both national classification and IPC

| B. | FIELDS SEARCHED |
|---|---|

Minimum documentation searched (classification system followed by classification symbols)

IPC：H04L

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI; 3GPP: 节点, 基站, 终端, 子模型, 描述, 标识, 传输, 发送, 接收, 分布, AI, sub-model, network, node, description, identification, distributed, transmission

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114491657 A (CHINA UNIONPAY CO., LTD.) 13 May 2022 (2022-05-13) description, paragraphs [0004]-[0282], and figures 1-10 | 1-56 |
| A | CN 112163675 A (SHENZHEN QIANHAI WEBANK CO., LTD.) 01 January 2021 (2021-01-01) entire document | 1-56 |
| A | CN 113839797 A (HUAWEI TECHNOLOGIES CO., LTD.) 24 December 2021 (2021-12-24) entire document | 1-56 |
| A | US 2021286989 A1 (IBM) 16 September 2021 (2021-09-16) entire document | 1-56 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 August 2023** | **09 September 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2022/140128**

| Patent document cited in search report | | | Publication date (day/month/year) | Patent family member(s) | Publication date (day/month/year) |
|---|---|---|---|---|---|
| CN | 114491657 | A | 13 May 2022 | None | |
| CN | 112163675 | A | 01 January 2021 | None | |
| CN | 113839797 | A | 24 December 2021 | None | |
| US | 2021286989 | A1 | 16 September 2021 | None | |

Form PCT/ISA/210 (patent family annex) (July 2022)